# EUROPEAN PATENT SPECIFICATION

(11) **EP 2 435 282 B1**
(45) Date of publication and mention of the grant of the patent: **28.11.2018**
(21) Application number: 10780888.3
(22) Date of filing: 26.05.2010
(51) Int. Cl.: B60S 5/02, F17C 5/00, F17C 5/06, F17C 1/00

(54) **HANDLING OF GASEOUS FUELS**
HANDHABUNG GASFÖRMIGER BRENNSTOFFE
MANIPULATION DE COMBUSTIBLES GAZEUX

(30) Priority: 27.05.2009 SE 0900710
(43) Date of publication of application: 04.04.2012
(73) Proprietor: Månbas Alpha AB, 619 35 Trosa (SE)
(72) Inventor: STENMARK, Lars, 619 35 Trosa (SE)
(74) Representative: Aros Patent AB
(86) International application number: PCT/SE2010/050567
(87) International publication number: WO 2010/138067

(56) References cited:
- WO-A1-2007/032742
- WO-A1-2007/032742
- WO-A2-2008/019414
- DE-A1-102007 052 259
- US-A- 4 846 370
- US-A1- 2007 175 505
- US-A1- 2007 175 505
- US-A1- 2008 138 674

## Description

### Technical field of the invention

The present invention relates to a system for handling gaseous fuels using a multitude of sub-tanks. In particular the invention relates to exchange of sub-tanks in a fuel tank.

### Background of the invention

In the future it is most likely that gas will be used as the energy carrier for many mobile applications, replacing fossil fuels, in vehicles such as cars, boats, lawn movers, etc. Hydrogen is in many respects the perfect energy carrier. The energy content is almost three times higher than gasoline and when used in a fuel cell to generate electricity or in combustion engine the only residual product is water, which in principle can be re-used to produce hydrogen again. The main problem with the introduction of hydrogen as a gaseous fuel in large scale has been the difficulties to transport and store the volume demanding gas (hydrogen is the lightest element in the periodical system, with a mass of only 90 gram per standard cubic meter), but today several promising concepts are under development.

In one concept, the required gas is stored in a multitude of small spherical sub-tanks, together providing the demanded storage capacity. For example, WO 2007/032742 discloses such a distributed gas storage concept wherein a gas storage system comprises a tank with a multitude of gas emitting entities, i.e. sub-tanks, encapsulated by the tank. The gas emitting entities can be pre-packed or pre-filled before being inserted in the tank, thereby enabling an easy and safe handling during filling of the tank.

Gas emitting entities suitable for storage of hydrogen gas are described in WO 2007/032741. A plurality of these gas emitting entities, preferably being small spheres with a shell made of metallic or composite material, can be used to store and deliver gas in a tank of a gas storage system like the one described above. Due to the preferred spherical shape these gas emitting entities are also known as macrospheres, powerballs, etc. Thanks to a check valve controlled fluid control system these gas emitting entities requires limited physical handling upon filling and releasing gas.

What is missing is a practical way to move the small sub-tanks from a central storage entity to the consumer and back.

### Summary of the invention

An object of the present invention is to provide improved handling of gaseous fuels. In particular one object of the present invention is to provide a system for moving of pre-filled and/or consumed sub-tanks between a central storage entity and a consumer entity.

The objects of the invention are accomplished by a system and a method for handling gaseous fuels using a multitude of sub-tanks in accordance with the independent claims.

In a first aspect of the invention a fuel tank is provided. The fuel tank comprises a sealable tank inlet for insertion of pre-filled sub-tanks and a sealable tank outlet for release of return sub-tanks, wherein each sub-tank is arranged for, upon release of gas as a response on a stimulation signal or due to a pressure change in said fuel tank, providing a gas volume, that is larger than a volume of said sub-tank. A vent valve may be used to discharge gas from the fuel tank, e.g. to be used to provide energy to a vehicle.

Preferably, the fuel tank is adapted to allow only one sub-tank at a time to enter the fuel tank. Thus, when the fuel tank previously has been filled with sub-tanks, the number of filled sub-tanks entering the fuel tank is substantially the same as the number of return sub-tanks being released from the fuel tank. This can for example be accomplished by having a tube with an interior diameter essentially corresponding to an outer diameter of the sub-tanks, or with an internal structure guiding the sub-tanks along a path through the fuel tank.

From a common inlet of the fuel tank the sub-tank path through the fuel tank can be branched. Preferably these branches are separate compartments that can be individually pressurised. Such an arrangement enables filling and emptying of one branch at a time and thus the exchange of sub-tanks in the fuel tank can be substantially limited to only those sub-tanks that have been consumed.

In a second aspect of the invention an exchanger unit is provided. If the fuel tank is exemplified by a vehicle fuel tank the exchanger unit corresponds to a gasoline pump. The exchanger unit, which is suitable for filling up a fuel tank of the kind described above with sub-tanks, comprises a sealable outlet for ejection of a multitude of sub-tanks to the tank inlet and a sealable inlet for collection of a multitude of sub-tanks from tank outlet, wherein each inlet-outlet pair is connected by a sealable coupling. The exchanger unit further comprises a supply vessel arranged in an outlet section of the exchanger unit and a return vessel arranged in an inlet section of the exchanger unit, with a compressor arranged in between the vessels for generating a gas flow carrying filled sub-tanks from the supply vessel to the fuel tank and return sub-tanks from the fuel tank to the return vessel. As in the fuel tank described above the inlet and outlet sections are preferably matched in dimension to the sub-tanks, thereby moving sub-tanks into and out from the fuel tank in a sequential manner.

Separate or together the fuel tank and the exchanger unit form a system for handling gaseous fuels. The system is based on the use of sub-tanks as gas carriers. By having the fuel tank and the exchanger unit connected such that a closed system is formed and the gas flow forms a closed loop and re-circulates in the system no gas is lost and the fuel tank can be kept pressurised to be ready for use immediately after exchange of sub-tanks.

In a third aspect the present invention provides a sealable coupling and an isolation valve suitable for use in the system of the invention. During filling and emptying of the fuel tank the sealable couplings connect the fuel tank and the exchanger unit. The sealable couplings preferably comprise an isolation valve on each of the fuel tank side and the exchanger unit side. In one embodiment the sealable coupling comprises two isolation valves, an interface ring between said isolation valves and a ventilation valve for the interface ring. In another embodiment the sealable coupling comprises two isolation valves, an isolation ring, and a data communication link.

In one embodiment, sub-tanks can be used as sealing elements in the isolation valve of the invention by capturing them with an elastic sleeve. In principle the elastic sleeve works as a bellow that is inflated to capture one sub-tank, to fix it in position and to seal against the surface thereof. Preferably the elastic sleeve has a resilient sealing surface in order to seal also any rough surfaces on the sub-tank.

In order to improve the speed and reduce the effort in exchanging sub-tanks the gas flow may be used to reduce the friction of sub-tanks moving in the fuel tank. This can be accomplished by having a shape of the interior of the fuel tank that forces the gas flow to be squeezed between the sub-tanks and the interior of the fuel tank. The squeezed gas film provides an air bearing that significantly lower the friction.

By allowing only one sub-tank at the time to enter the fuel tank, i.e. sub-tanks are injected into the fuel tank in a sequential manner, the number of sub-tanks delivered to the fuel tank can be efficiently controlled. Sealing by using a sub-tank is also a cost-effective solution.

In a fourth aspect the present invention provides a method for moving sub-tanks between an exchanger unit and a fuel tank. The basic steps of the method are:
providing a fuel tank that comprises a sealable tank inlet and a sealable tank outlet and is filled with sub-tanks;
connecting the sealable tank outlet to a sealable outlet of the exchanger unit and the sealable tank outlet to a sealable inlet of the exchanger unit;
generating a gas flow from a supply vessel, which comprises pre-filled sub-tanks, through the fuel-tank and into the return vessel, whereby the pre-filled sub-tanks are moved into the fuel tank and return sub-tanks are moved into the return vessel.

The gas flow may be generated by generating a differential pressure between the supply vessel and the fuel tank and between the fuel tank and the return vessel using a compressor arranged in between the return vessel and the supply vessel in the exchanger unit. By having the gas flow re-circulating within the connected fuel tank and the exchanger unit a working gas pressure can be maintained and the fuel tank is ready for use immediately after refuelling.

Preferably sub-tanks are used as sealing elements in at least one of the sealable inlets and outlets. This makes system simple and the operator does not have to handle any exterior valves.

Thanks to the invention gas can be pre-filled and stored in small autonomous, preferably spherical, sub-tanks before transport to a central storage entity with an exchanger unit of the invention. From the exchanger unit a multitude of these pre-filled sub-tanks can be delivered in a fast, reliable and effective way to a fuel tank of e.g. a vehicle, while collecting emptied return sub-tanks in the exchanger unit in an ordered and controlled manner for a refill at a large-scale production site.

Embodiments of the invention are defined in the dependent claims. Other objects, advantages and novel features of the invention will become apparent from the following detailed description of the invention when considered in conjunction with the accompanying drawings and claims.

### Brief description of the drawings

Preferred embodiments of the invention will now be described with reference to the accompanying drawings, wherein
FIG. 1 schematically illustrates a system for handling gaseous fuel in accordance with the invention,
FIG. 2 is a schematic block diagram of a system in accordance with the invention,
FIG. 3 schematically illustrates a multi-branched fuel tank in accordance with the invention,
FIG. 4 schematically illustrates a cross-section through a part of a multi-branched fuel tank in accordance with the invention,
FIG. 5A-C schematically illustrate cross-sectional views of in (A) an isolation valve in released position, in (B) in locked position, and in (C) in locked and sealed position in accordance with the invention, and
FIG. 6A-C schematically illustrate cross-sectional views of the interface between fuel tank and exchanger unit, in (A) with one sub-tank trapped in the interface ring at ambient pressure, in (B) at ambient pressure, without a trapped sub-tank, and in (C) at working pressure.

### Detailed description of embodiments

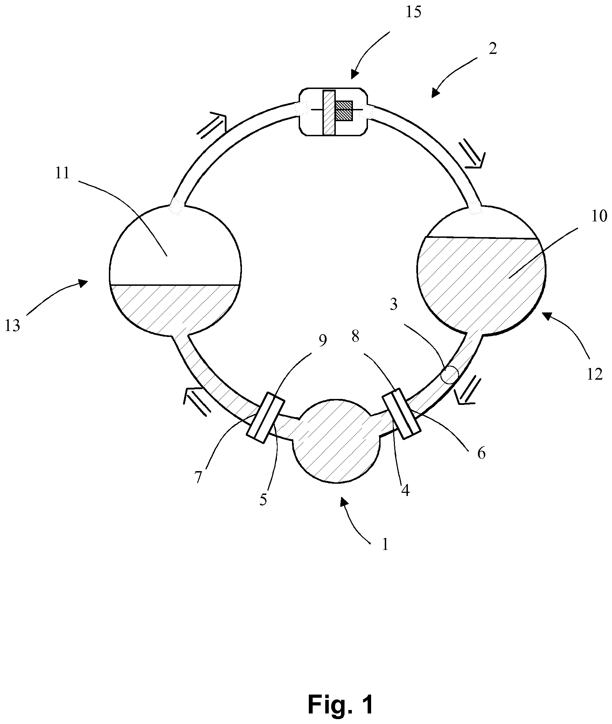

FIG. 1 schematically illustrates one embodiment of a system for handling gaseous fuels using a multitude of sub-tanks 3. In this embodiment the system comprises a fuel tank 1 and an exchanger unit 2, cf. the fuel tank of a car and the petrol pump, respectively. In contrast to today's filling of petrol or gaseous fuels the present invention is based on pre-filling of small sub-tanks 3 with gaseous fuel and thereafter filling the fuel tank 1 with these pre-filled sub-tanks 3. Each sub-tank 3 is arranged for, upon release of gas as a response on a stimulation signal or due to a pressure change in said fuel tank 1, providing a gas volume, which is larger than a volume of said sub-tank 1, whereby a sufficient working pressure can be maintained in the fuel tank 1. The fuel tank comprises a sealable tank inlet 4 for insertion of pre-filled sub-tanks 3 and a sealable tank outlet 5 for release of return sub-tanks 3. The exchanger unit 2 comprises a sealable outlet 6 for ejection of a multitude of sub-tanks 3 to the tank inlet 4 and a sealable inlet 7 for collection of a multitude of sub-tanks 3 from the tank outlet 5. In addition, the exchanger unit 2 comprises at least two reservoirs for sub-tanks 3. One of the reservoirs is a supply vessel 10 for pre-filled sub-tanks 3 arranged in an outlet tube 12 of the exchanger unit 2 and one of the reservoirs is a return vessel 11 for return sub-tanks 3 arranged in an inlet tube 13 of the exchanger unit 2. When the fuel tank 1 and the exchanger unit 2 are connected for sub-tank exchange each inlet-outlet pair is connected by a sealable coupling 8, 9, also known as a gas umbilical. Preferably the sealable couplings 8, 9 are formed by parts of the exchanger unit and the fuel tank, however not limited to this.

One important aspect of the invention is moving of sub-tanks 3 by a gas flow. By having a higher pressure in the supply vessel 10 than in the fuel tank 1 and/or a lower pressure in the return vessel 11 sub-tanks 3 are pushed into and sucked out from the fuel tank 1, respectively. The gas flow and the differential pressures in the system can be accomplished by use of a compressor 15, preferably arranged between the supply vessel 10 and the return vessel 11 in the exchanger unit 2.

Unlike a common fuel tank for liquid or gaseous fuel where the fuel is simply filled into a large compartment, the shape of the fuel tank 1 of the invention is adapted to the shape of the sub-tanks 3. Preferably the sub-tanks are forced to follow a path through the fuel tank 1 or the fuel tank 1 is simply formed as one or more tubes, each with an interior diameter matching the exterior diameter of the sub-tanks 3. Thereby the sub-tanks are moved through the fuel tank in a sequential manner. Typically the fuel tank 1 will be filled with sub-tanks 3 before being connected to the exchanger unit 2. Consequently, when filling sub-tanks 3 the number of filled sub-tanks 3 entering the fuel tank 3 is substantially the same as the number of return sub-tanks 3 being released from the fuel tank 1.

If the flow speed of the gas flow through a single-branch fuel tank with dimensions fitted to the dimension of the sub-tanks, in this example spheres with a diameter of 40mm, is 8 m/s and it is assumed that the sub-tanks are moved along the fuel tank at half the flow speed it follows that 100 sub-tanks per second can be transferred to/from the fuel tank, resulting in a refuelling time for a car of 1-2 minutes. It shall be noted that the system further permits refuelling by replacing the sub-tanks without loosing the working pressure in the vehicle, which means that the vehicle can be used directly after a refill of fuel. Constant overpressure during the exchange also prevents air from coming into the system.

The sub-tanks 3 are arranged for providing a gas volume, which when released from said sub-tanks 3, is considerably larger than a volume of the sub-tanks 3 themselves. Examples of sub-tanks are propellant canisters, high-pressure gas containers and containers in which gas is mechanically trapped in a solid or liquid. The sub-tanks 3 are freely contained in the fuel tank 3, i.e. there are no gas conduits or electrical connections between the sub-tanks 3 and the fuel tank 1, and the sub-tanks 3 have a respective gas release device, which is operable as a response on a stimulation signal or a pressure change in the fuel tank 1. For efficient hydrogen storage, a sub-tank 1 like the gas emitting entity described in WO 2007/032741 is suitable. Operation of this kind of sub-tank does not require any handling of valves or connection of gas conduits, since opening and closing of the sub-tank can be controlled by ambient pressure. A spherical shape is advantageous since it is optimal with regards to being able to withstand high pressures. It is also advantageous since the spherical sub-tanks easily are transported in the system.

Thus, in one aspect the invention relates to how a large number of small spherical sub-tanks 1, each filled with gas under high pressure, can be used to fuel a mobile device such as a car in an convenient way. The complete system including the exchanger unit 2 and the fuel tank 1 is a fill and return system handling hundreds or thousands of small autonomous spherical sub-tanks, typically in the size of a ping-pong ball, for each refuelling. The working principle can be described with reference to FIG. 1. The supply vessel 10 of the exchanger unit is filled with pre-filled sub-tanks 3. A compressor 15 inside a pressure tight housing, arranged in-between the return vessel 11 and the supply vessel, generates a gas flow towards the fuel tank 1, through the fuel tank 1, and into the return vessel 11 in a closed loop, which also forms a differential pressure as described above. Thereby, pre-filled sub-tanks 3 are forced towards and into the fuel tank, while return sub-tanks 3 are pushed out from the tank and into the return vessel 11. As schematically illustrated in FIG. 1 the connections between the vessels 10, 11 and the fuel tank 1 are preferably tubular and with an inner diameter that is slightly larger than the outer diameter of the sub-tanks 3. The fuel tank 3 may also be tubular with essentially the same diameter as the tubular parts of the exchanger unit. Due to this tubular shape the sub-tanks are moved along the system one after the other at a speed slightly less than the gas flow. This makes it possible to control the number of exchanged sub-tanks 3. After the exchange has been completed the sealable couplings 8, 9 are closed and depressurized on both the fuel tank side and the exchanger unit side, permitting the fuel tank 1 to be released from the exchanger unit 2.

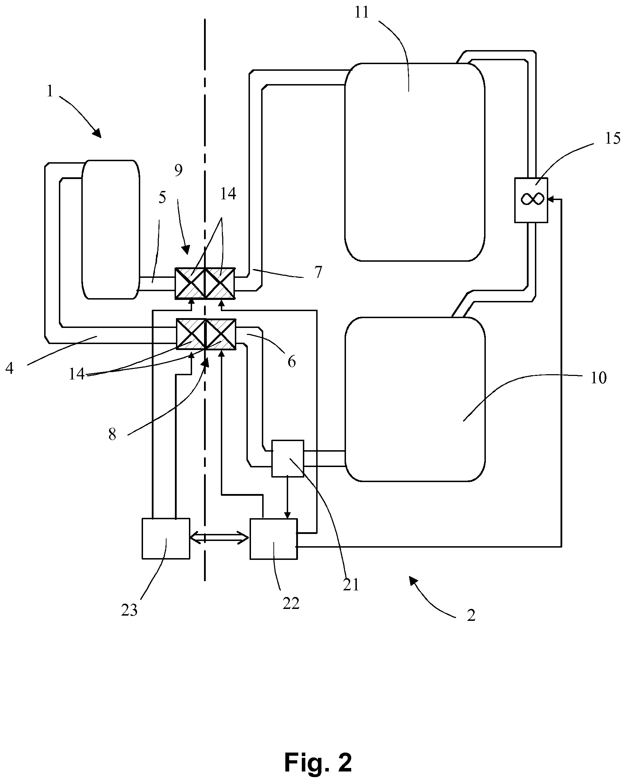

FIG. 2 schematically illustrates another embodiment of the present invention. The borderline between the fuel tank 1 and the exchanger unit 2 is indicated by a dotted line. Pre-filled sub-tanks 3 are contained in a supply vessel 10, which is drained from the bottom. Return sub-tanks, typically empty, are collected in a return vessel 11, which is filled from the top. When the fuel tank is connected to the exchanger unit 2 by sealable couplings 8, 9 and a compressor 15, which connects the return vessel 11 with a supply vessel 10 within the exchanger unit, starts generating a gas flow from the return vessel 11 to the supply vessel, sub-tanks 3 are pushed out through a bottom tube, i.e. an outlet section, of the exchanger unit 2 in connection with the supply vessel 10, optionally through a counter 21. This movement of sub-tanks out from the supply vessel 10 pushes return sub-tanks 3 out from the fuel tank 1 into an inlet section of the exchanger unit and into the return vessel in a ordered manner. During this process isolation valves 14 of the sealable couplings 8, 9 are open. When the counter 21 indicates that a pre-determined number has been transferred a signal is given to a control box 22 of the exchanger unit 2, which communicates with another control box 23 in connection with the fuel tank 1 that it is time to close the isolation valves 14 in order to depressurize the sealable couplings 8, 9, so that the fuel tank 1 can be disconnected. As indicated in FIG. 2 the sealable couplings 8, 9 each may comprise two isolation valves 14, where one of the isolation valves belongs to the exchanger unit 2 and another isolation valve belongs to the fuel tank 1.

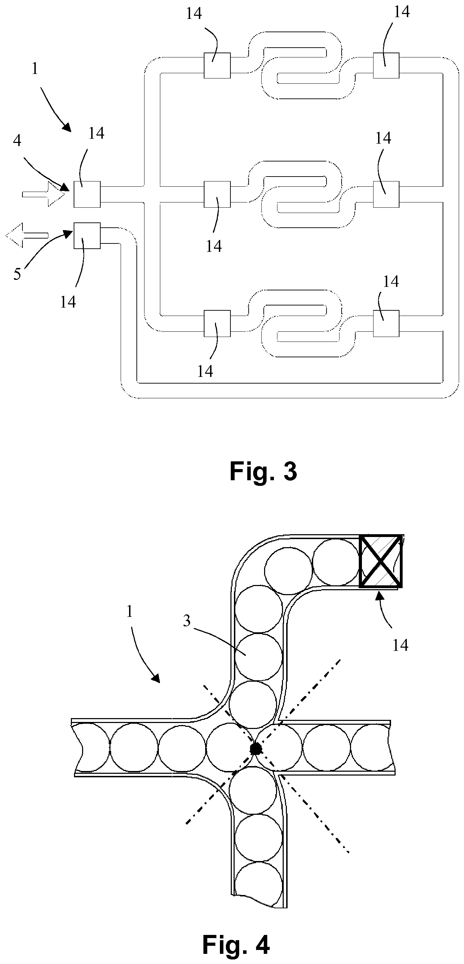

The fuel tank 1 can be a single compartment, such as a long tube bended to a suitable shape but with an inlet isolation valve in one end and an outlet isolation valve in the other end. Or it can be a larger open compartment with some kind of structure permitting the sub-tanks 3 to enter and leave in an ordered manner. However, in many respects it is practical to divide the total volume of the fuel tank into a number of sub-volumes or branches. FIG. 3 schematically illustrates a multi-branched fuel tank in accordance with the invention. For illustrative purposes there are three parallel branches, however not limited to this, and although illustrated as being straight parallel branches the branches may have different routes between the branch-out points. Pre-filled sub-tanks 3 can enter the fuel tank 1 through an isolation valve 14 into an inlet branch which is branched off into three branches. Each of the parallel branches ends up in an outlet branch and return sub-tanks leave the fuel tank 1 through an isolation valve. Each of the three parallel branches preferably comprises an isolation valve in each end thereof. When refuelling is completed all isolation valves are locked and sealed, completely sealing said branches from each other.

In one embodiment of the system the total length for each of said inlet and outlet branches are approximately the same as said three parallel branches, which divides the total fuel tank volume into parts with equal storage capacity.

Each branch preferably has at least one normally closed drain valve (not shown). In order to drain a branch of the fuel tank 1 one drain valve is opened and gas is drained from that particular branch. If the consumer load is high, a second or even several drain valves can be opened in parallel.

A multi-branch system enables one section at the time to be drained, and individually reloaded, which makes it possible to efficiently control the amount of gaseous fuel left and to re-fill the tank in an efficient manner. In one embodiment of the invention only branches with emptied or partly emptied sub-tanks 3 can be selected for reload. Thereby a minimal amount of gaseous fuel is returned to the exchanger unit and the refuelling becomes faster. By monitoring the pressure in each branch, estimation about how much gas is left in the fuel tank can be further improved, as the secondary pressure from a batch of sub-tanks 3 loaded into the fuel tank 3 to a certain degree depend on the average primary pressure in the sub-tanks in the batch.

As the system can be self-regulating in the respect that if a sub-tank has a higher internal pressure then others in the same branch, it will have the capacity to deliver gas to a higher pressure than sub-tanks with a lower internal pressure. That means that the primary pressure after a while will be equal in all sub-tanks surrounded by the same secondary pressure and the secondary pressure becomes a measure of the total amount of gas left in that part of the system, which can be used for monitoring the gaseous fuel left.

It should be pointed out that it is important how said inlet and outlet branches of the fuel tank 3 are branched out, as depending on the refuelling scheme not all sub-tanks 3 can be replaced. The distance from a branch-out point to the adjacent isolation valve of each parallel branch should be as small as possible, i.e. the number of sub-tanks located between the branch-out point and the adjacent isolation valves should be as small as possible; the same goes for both the inlet side and the outlet side of the fuel tank 1.

FIG. 4 schematically illustrates the position of sub-tanks 3 inside at a branch-out point. An inlet tubular branch extending from the sealable coupling 8 is branched out into three tubular branches. Sub-tanks entering the fuel tank are at the branch-out point directed into one of the branches, determined by the state of the isolation valves, i.e. open or closed. It is important that the distance between the branch-out point and the isolation valves are a multiple of the diameter of the sub-tanks meaning that when the spheres are packed against each other no none will cross the dotted lines indicated in FIG. 4. Otherwise incoming sub-tanks will be obstructed from going into another branch. The number of sub-tanks between an isolation valve 14 and the branch-out point should be as small as possible as they cannot be replaced in all exchange schemes.

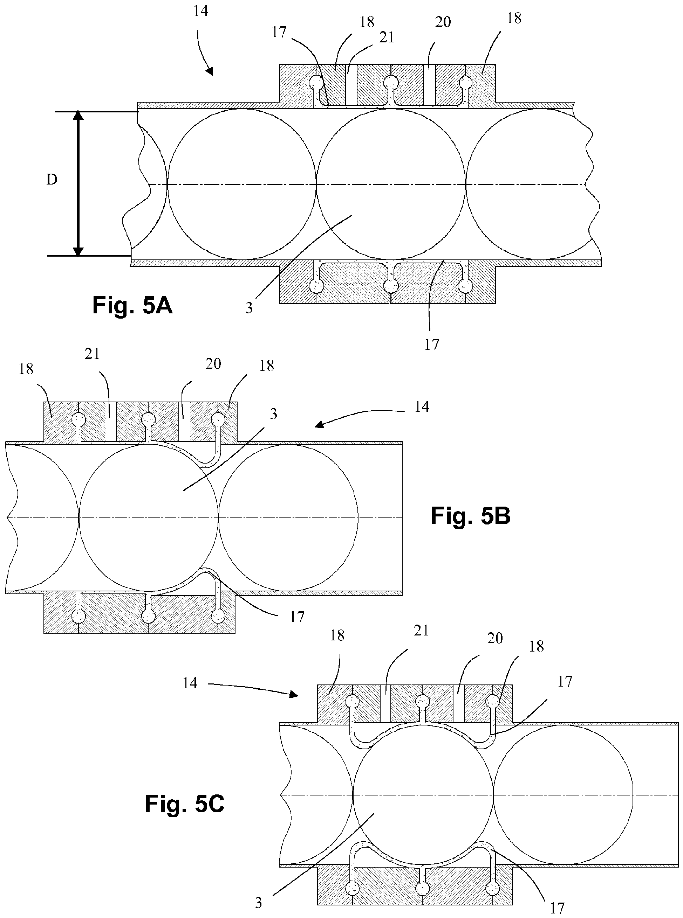

The isolation valve 14 is an important component or subsystem both in the sealable couplings and in the branched fuel tank configuration. One embodiment of an isolation valve 14 in accordance with the invention is schematically illustrated in FIG. 5. This isolation valve 14 uses one of the sub-tanks 3 as a sealing element by capturing it between one or more elastic sleeves 17 of the isolation valve 14. This configuration is robust and requires only three elements inserted between two tube flanges. In FIG. 5A the isolation valve 14 depicted in open mode. The isolation valve 14 comprises two metallic rings 18 between two adjacent sections of the fuel tank 3. An elastic sleeve 17 is inserted between the rings 18 and the tube flanges. The elastic sleeve comprises three moulded in O-rings. In the figure there is no gas pressure applied through at least first and second ports 20, 21, meaning the elastic sleeve, which for example can be made of rubber or an elastic polymer, is resting flush against the rings, giving the same diameter as it is in the adjacent tank sections.

In one embodiment the interior diameter D of the fuel tank is just slightly larger than the diameter of the sub-tanks to give room for a squeezed film of the gas flow between the sub-tanks and the interior of the fuel tank walls, which results in lowered friction between the walls and the sub-tanks resulting in a very low requirement on the pressure difference across each sub-tank to permit them to be dragged along the gas stream with almost the same speed as the speed of gas flow itself.

When the isolation valve closes a sub-tank 3 is prevented from continuing to move with the gas since the elastic sleeve 17 is deflected in- wards due to a first inflated volume creating a too small diameter for the sub-tanks to pass. The first inflated volume may be obtained by injecting a small amount of gas through the first port 20 at a slightly higher pressure then pressure inside the system, see FIG. 5B. Immediately after stopping a sub-tank a second inflated volume makes the elastic sleeve deflect inwards behind the captured sub-tank, see FIG. 5C. The second inflated volume may be obtained by injecting a small amount of gas through the second port 21 at a slightly higher pressure then pressure inside the system. After the capture the pressure is slowly increased on the elastic sleeve 17 to such a high level that the elastic sleeve 17 is sealing around the captured sub-tank 3. The sub-tanks 3 before and after the captured sub-tank 3 are not affected by the elastic sleeve at all. As the sealing surface is large, i.e. covering the main part of the sub-tank surface with a high contact pressure applied the sealing properties are good even if the sub-tanks has scratches or minor dents on the surface or if the outlet hole from the sub-tank happens to be under the sealing surface. Although exemplified with an single elastic sleeve 17 for capturing and locking it should be appreciated that two elastic sleeves can be used for the purpose, one being used for capturing by inflation through port 20 and the other being used for locking by inflation through port 21.

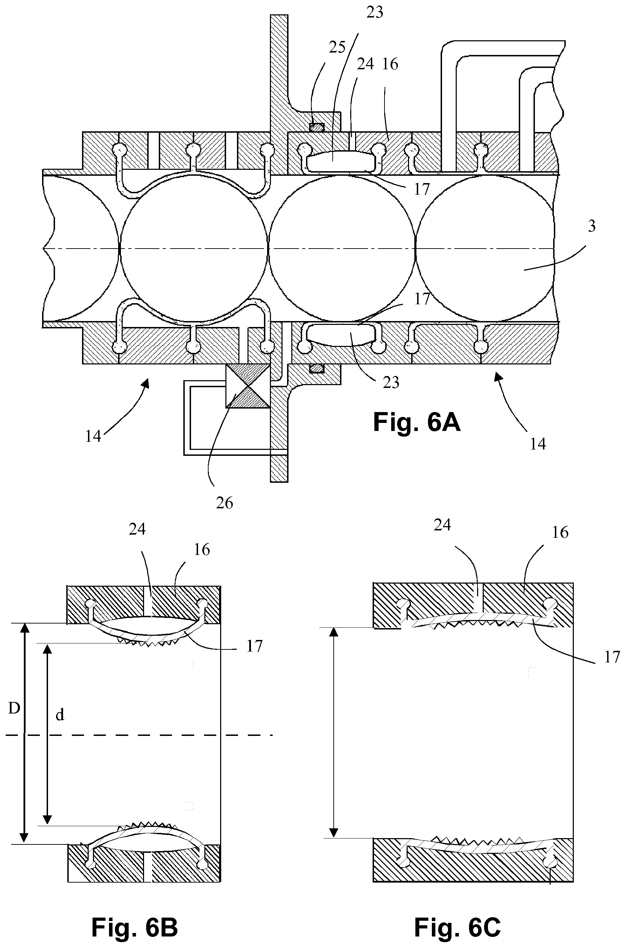

In FIG. 6A one embodiment of a sealable coupling is schematically illustrated. It comprises an interface ring 16 at the end of a filling handle of the exchanger unit 2 The interface ring 16 preferably fits into a cylindrical opening in a flange on a bulkhead at the inlet of the fuel tank 1. The interface ring 16 is sealed with an O-ring 25, preventing gas from leaking out during the filling process. Since the two isolation valves 14, one in the filling handle and one in the vehicle, can not meet each other with the flange in-between, a sub-tank is mechanically trapped in the interface ring 16 by use of an elastic sleeve 17 that is deflected into the tube, see FIG. 6B. The elastic sleeve 17 preferably has a textured surface to give maximum friction at the same time as gas can pass slowly from right to left in FIG. 6B, i.e. in direction towards the fuel tank 1. The sealable coupling in FIG. 6A is just in the situation that the isolation valve 14 has released its sub-tank and gas is flushing around it even if it can not move yet. The gas mixes with, and replaces, the air in cavities 23 in the interface ring and the mixture is vented out through a ventilation passage from the interior to the exterior of the system, controlled by a ventilation valve 26. After a few seconds almost all air is blown out from the system and the ventilation valve 26 is closed. As soon as it is closed pressure stars to build up and the elastic sleeve 17 is further deflected outwards by evacuation of the elastic sleeve through a ventilation passage 24, preferably controlled by a ventilation valve, until it reaches the bottom, see FIG. 6C. The diameter of the elastic sleeve is then the same or larger than the diameter of the sub-tanks, which now can pass freely. At this time is the isolation valve 14 on the fuel tank side opened and the sub-tank exchange starts. When the exchange is completed the same sequence starts in reversed order. First a sub-tank 3 is captured, locked in position and sealed in the receiving isolation valve 14 in on the exchanger unit side. This puts the next sub-tank just in position in the interface ring 16 and another sub-tank in position for the isolation valve 14 on the fuel tank side. A rear sleeve section of the isolation valve 14 on the fuel tank side is preferably immediately activated to lock the sub-tank 3 in position to prevent it from bouncing back due to a sudden stop. When the isolation valve on the fuel tank side is sealed the pressure in a volume surrounding the sub-tank that is captured in the interface ring 16 can be decreased, which means that elastic sleeve 17 grabs around the captured sub-tank 3 and the filling handle can be removed.

A method for handling gaseous fuels in accordance with the invention comprises moving sub-tanks between a fuel tank and an exchanger unit which are connected to each other. The method is based on moving the sub-tanks using a gas flow as explained above. Preferably the sub-tanks 3 are moved and stored in one or more tubular branches of the fuel tank 1 and the dimensions of these branches are adapted to the dimensions of the sub-tanks in order to move the sub-tanks 3 in a sequential manner. By having the dimensions of the tubular branches fitted to the dimensions of the sub-tanks the speed of movement can be improved. Further isolation valves utilizing sub-tanks as sealing elements can be used.

All references to top, bottom, etc. are introduced for the easy of understanding only, and should not be considered as limiting to specific orientation. Further the dimensions of the structures in the drawings are not necessarily to scale.

While the invention has been described in connection with what is presently considered to be the most practical and preferred embodiments, it is to be understood that the invention is not to be limited to the disclosed embodiments, on the contrary, it is intended to cover various modifications and equivalent arrangements within the appended claims.

## Claims

1. An exchanger unit (2) for handling a multitude of sub-tanks (3) for gaseous fuels, said exchanger unit (2) comprising:
- a supply vessel (10) in an outlet section (12);
- a return vessel (11) in an inlet section (13);
- a sealable outlet (6) adapted for ejection of a multitude of sub-tanks (3) from said supply vessel (10); and
- a sealable inlet (7) adapted for collection of a multitude of sub-tanks (3) to said return vessel (11),
and further comprising:
- a compressor (15) arranged between said supply vessel (10) and said return vessel (11) providing a differential pressure between said supply vessel and said return vessel (11), wherein a pressure in said supply vessel (10) is higher than in said return vessel (11);
whereby upon connecting said sealable outlet (6) and said sealable inlet (7) a gas flow being generated by said differential pressure for carrying sub-tanks (3) from the supply vessel (10) through said sealable outlet (6) and for carrying sub-tanks (3) through said sealable inlet (7) to the return vessel (11).

2. The exchanger unit according to claim 1, **characterised in that** said exchanger unit is adapted to be a part of a closed loop for said gas flow enabling re-circulation of said gas.

3. The exchanger unit according to claim 1 or 2, **characterised in that** connections between said supply vessel (10) and said sealable outlet (6) and connections between said sealable input (7) and said return vessel (11) are tubular with an inner diameter being slightly larger than the outer diameter of the sub-tanks (3) and being adapted to ensure that the sub-tanks (3) are moved one after the other.

4. The exchanger unit according to any of the claims 1 to 3, **characterised in that**
said sealable outlet (6) and said sealable inlet (7) is a part of a respective sealable coupling (8, 9).

5. A fuel tank (1) for handling a multitude of sub-tanks (3) for gaseous fuels, said fuel tank comprising:
- a sealable tank inlet (4) for insertion of sub-tanks (3), **characterised in** a sealable tank outlet (5) for release of sub-tanks (3), and **in that** said fuel tank (1 being configured to connect to an exchanger unit according to claim 1 and being adapted to enable a gas flow provided between said sealable tank inlet (4) and said sealable tank outlet (5) to carry sub-tanks (3) from said sealable tank inlet (4) to said sealable tank outlet (5).

6. The fuel tank according to claim 5, **characterised in that** said fuel tank (1) comprises an internal structure or said fuel tank (1) is shaped adapted to force said sub-tanks (3) to enter and leave said fuel tank (1) in a sequential manner.

7. The fuel tank according to claim 5 or 6, **characterised in that** said fuel tank (1) comprises at least two branches (1a, 1b) which can be independently pressurised by isolating the branches (1a, 1b) using one or more isolation valves (14).

8. The fuel tank according to claim 7, **characterised in that** the number of sub-tanks (3) in each branch (1a, 1b) is predetermined by the length of a sub-tank path through said each branch (1a, 1b).

9. The fuel tank according to claim 7 or 8, **characterised in that** each branch (1a, 1b) is individually addressable.

10. The fuel tank according to any of the claims 6 to 9, **characterised in that** said a sealable tank inlet (4) and said sealable tank outlet (5) is a part of a respective sealable coupling (8, 9).

11. A system for handling a multitude of sub-tanks (3) for gaseous fuels, said comprising an exchanger unit (2) according to any of the claims 1 to 4 and a fuel tank (1) according to any of the claims 5 to 10, comprising sealable couplings (8, 9) between said sealable outlet (6) and said sealable tank inlet (4) and between said sealable tank outlet (5) and said sealable inlet (7), each sealable coupling (8, 9) comprises two isolation valves (14), an interface ring (16) between said isolation valves (14) and a ventilation valve (20) for the interface ring (16).

12. The system according to claim 11, **characterised in that** at least one of the isolation valves (14) of the sealable coupling (8, 9) are adapted to utilise a sub-tank (3) as a sealing element.

13. The system according to claim 11 or 12, **characterised in that** an elastic sleeve (17) of the isolation valve (14) provides a resilient sealing surface in order to seal also any rough surfaces on the sub-tank (3).

14. A method for moving sub-tanks (3) between an exchanger unit (2) and a fuel tank (1), the method comprising the steps of:
- providing a fuel tank (1) that comprises a sealable tank inlet (4) and a sealable tank outlet (5) and is filled with sub-tanks (3);
- connecting the sealable tank inlet (4) to a sealable outlet (6) of the exchanger unit (2) and the sealable tank outlet (5) to a sealable inlet (7) of the exchanger unit (2);
- generating a gas flow from a supply vessel (10) of the exchanger unit (2), which supply vessel (10) comprises pre-filled sub-tanks (3), through the fuel-tank (1) and into a return vessel (11) of the exchanger unit (2),
whereby the pre-filled sub-tanks (3) are moved by said gas flow into the fuel tank (1) through the sealable outlet (6) and the sealable tank inlet (4) and sub-tanks from said fuel tank (1) are moved by said gas flow into the return vessel (11) through the sealable tank outlet (5) and the sealable inlet (7).

15. The method of claim 14, wherein the generation of the gas flow comprises generating a differential pressure between the supply vessel (10) and the fuel tank (1) and between the fuel tank (1) and the return vessel (11) using a compressor (15) arranged in between the return vessel (11) and the supply vessel (10) in the exchanger unit (2).

16. The method of claim 14 or 15, wherein sub-tanks (3) are used as sealing elements in at least one of the sealable inlets and outlets (4, 5, 6, 7).

17. The method of claims 15 or 16, wherein the gas flow is circulating in a closed loop and re-circulated within the connected fuel tank (1) and exchanger unit (2).

## Patentansprüche

1. Austauscheinheit (2) zur Handhabung einer Vielzahl von Untertanks (3) für gasförmige Brennstoffe, wobei die Austauscheinheit (2) Folgendes umfasst:
- einen Versorgungsbehälter (10) in einem Auslassbereich (12) ;
- einen Rückführbehälter (11) in einem Einlassbereich (13);
- einen abdichtbaren Auslass (6), der zum Auswerfen einer Vielzahl von Untertanks (3) aus dem Versorgungsbehälter (10) angepasst ist; und
- einen abdichtbaren Einlass (7), der zum Sammeln einer Vielzahl von Untertanks (3) in dem Rückführbehälter (11) angepasst ist,
und ferner Folgendes umfasst:
- einen Verdichter (15), der zwischen dem Versorgungsbehälter (10) und dem Rückführbehälter (11) angeordnet ist und einen Differenzdruck zwischen dem Versorgungsbehälter und dem Rückführbehälter (11) bereitstellt, wobei ein Druck in dem Versorgungsbehälter (10) größer ist als in dem Rückführbehälter (11);
wobei beim Verbinden des abdichtbaren Auslasses (6) und des abdichtbaren Einlasses (7) durch den Differenzdruck eine Gasströmung erzeugt wird, um Untertanks (3) von dem Versorgungsbehälter (10) durch den abdichtbaren Auslass (6) zu befördern und um Untertanks (3) durch den abdichtbaren Einlass (7) in den Rückführbehälter (11) zu befördern.

2. Austauscheinheit nach Anspruch 1, **dadurch gekennzeichnet, dass** die Austauscheinheit dazu angepasst ist, ein Teil einer geschlossenen Schleife für die Gasströmung zu sein, die eine Rezirkulation des Gases ermöglicht.

3. Austauscheinheit nach Anspruch 1 oder 2, **dadurch gekennzeichnet, dass** Verbindungen zwischen dem Versorgungsbehälter (10) und dem abdichtbaren Auslass (6) und Verbindungen zwischen dem abdichtbaren Einlass (7) und dem Rückführbehälter (11) rohrförmig sind und einen Innendurchmesser aufweisen, der geringfügig größer ist als der Außendurchmesser der Untertanks (3), und dazu angepasst sind sicherzustellen, dass die Untertanks (3) nacheinander bewegt werden.

4. Austauscheinheit nach einem der Ansprüche 1 bis 3, **dadurch gekennzeichnet, dass**
der abdichtbare Auslass (6) und der abdichtbare Einlass (7) ein Teil einer jeweiligen abdichtbaren Kopplung (8, 9) sind.

5. Brennstofftank (1) zur Handhabung einer Vielzahl von Untertanks (3) für gasförmige Brennstoffe, wobei der Brennstofftank Folgendes umfasst:
- einen abdichtbaren Tankeinlass (4) zum Einführen von Untertanks (3),
**gekennzeichnet durch**
einen abdichtbaren Tankauslass (5) zum Freigeben von Untertanks (3)
und **dadurch**, dass der Brennstofftank (1) dazu konfiguriert ist, sich mit einer Austauscheinheit nach Anspruch 1 zu verbinden, und dazu angepasst ist, eine Gasströmung zu ermöglichen, die zwischen dem abdichtbaren Tankeinlass (4) und dem abdichtbaren Tankauslass (5) bereitgestellt ist, um Untertanks (3) von dem abdichtbaren Tankeinlass (4) zu dem abdichtbaren Tankauslass (5) zu befördern.

6. Brennstofftank nach Anspruch 5, **dadurch gekennzeichnet, dass** der Brennstofftank (1) eine Innenstruktur umfasst oder dass der Brennstofftank (1) in seiner Form dazu angepasst ist, die Untertanks (3) dazu zu zwingen, in einer sequentiellen Weise in den Brennstofftank (1) einzutreten und ihn zu verlassen.

7. Brennstofftank nach Anspruch 5 oder 6, **dadurch gekennzeichnet, dass** der Brennstofftank (1) wenigstens zwei Abzweigungen (1a, 1b) umfasst, die durch ein Isolieren der Abzweigungen (1a, 1b) unter Verwendung von einem oder mehreren Isolationsventilen (14) unabhängig unter Druck gesetzt werden können.

8. Brennstofftank nach Anspruch 7, **dadurch gekennzeichnet, dass** die Anzahl von Untertanks (3) in jeder Abzweigung (1a, 1b) durch die Länge eines Untertankwegs durch die jeweilige Abzweigung (1a, 1b) vorbestimmt ist.

9. Brennstofftank nach Anspruch 7 oder 8, **dadurch gekennzeichnet, dass** jede Abzweigung (1a, 1b) individuell adressierbar ist.

10. Brennstofftank nach einem der Ansprüche 6 bis 9, **dadurch gekennzeichnet, dass** der abdichtbare Tankeinlass (4) und der abdichtbare Tankauslass (5) ein Teil einer jeweiligen abdichtbaren Kopplung (8, 9) sind.

11. System zur Handhabung einer Vielzahl von Untertanks (3) für gasförmige Brennstoffe, wobei das eine Austauscheinheit (2) nach einem der Ansprüche 1 bis 4 und einen Brennstofftank (1) nach einem der Ansprüche 5 bis 10 umfasst, umfassend abdichtbare Kopplungen (8, 9) zwischen dem abdichtbaren Auslass (6) und dem abdichtbaren Tankeinlass (4) und zwischen dem abdichtbaren Tankauslass (5) und dem abdichtbaren Einlass (7), wobei jede abdichtbare Kupplung (8, 9) zwei Isolationsventile (14), einen Zwischenring (16) zwischen den Isolationsventilen (14) und ein Ventilationsventil (20) für den Zwischenring (16) umfasst.

12. System nach Anspruch 11, **dadurch gekennzeichnet, dass** wenigstens eines der Isolationsventile (14) der abdichtbaren Kopplung (8, 9) dazu angepasst ist, einen Untertank (3) als ein Dichtelement zu nutzen.

13. System nach Anspruch 11 oder 12, **dadurch gekennzeichnet, dass** eine elastische Hülse (17) des Isolationsventils (14) eine belastbare Dichtungsoberfläche bereitstellt, um ebenfalls jegliche rauen Oberflächen des Untertanks (3) abzudichten.

14. Verfahren zum Bewegen von Untertanks (3) zwischen einer Austauscheinheit (2) und einem Brennstofftank (1), wobei das Verfahren die folgenden Schritte umfasst:
- Bereitstellen eines Brennstofftanks (1), der einen abdichtbaren Tankeinlass (4) und einen abdichtbaren Tankauslass (5) umfasst und mit Untertanks (3) gefüllt ist;
- Verbinden des abdichtbaren Tankeinlasses (4) mit einem abdichtbaren Auslass (6) der Austauscheinheit (2) und des abdichtbaren Tankauslasses (5) mit einem abdichtbaren Einlass (7) der Austauscheinheit (2);
- Erzeugen einer Gasströmung von einem Versorgungsbehälter (10) der Austauscheinheit (2), wobei der Versorgungsbehälter (10) vorgefüllte Untertanks (3) umfasst, durch den Brennstofftank (1) und in einen Rückführbehälter (11) der Austauscheinheit (2),
wobei die vorgefüllten Untertanks (3) durch die Gasströmung durch den abdichtbaren Auslass (6) und den abdichtbaren Tankeinlass (4) in den Brennstofftank (1) bewegt werden und Untertanks von dem Brennstofftank (1) durch die Gasströmung durch den abdichtbaren Tankauslass (5) und den abdichtbaren Einlass (7) in den Rückführbehälter (11) bewegt werden.

15. Verfahren nach Anspruch 14, wobei das Erzeugen der Gasströmung ein Erzeugen eines Differenzdrucks zwischen dem Versorgungsbehälter (10) und dem Brennstofftank (1) und zwischen dem Brennstofftank (1) und dem Rückführbehälter (11) unter Verwendung eines Verdichters (15) umfasst, der zwischen dem Rückführbehälter (11) und dem Versorgungsbehälter (10) in der Austauscheinheit (2) angeordnet ist.

16. Verfahren nach Anspruch 14 oder 15, wobei Untertanks (3) als Dichtelemente in wenigstens einem von den abdichtbaren Einlässen und Auslässen (4, 5, 6, 7) verwendet werden.

17. Verfahren nach Anspruch 15 oder 16, wobei die Gasströmung in einer geschlossenen Schleife zirkuliert und innerhalb des Brennstofftanks (1) und der Austauscheinheit (2), die verbunden sind, rezirkuliert wird.

## Revendications

1. Unité d'échangeur (2) pour la manipulation d'une multitude de sous-réservoirs (3) pour combustibles gazeux, ladite unité d'échangeur (2) comprenant :
- une cuve d'alimentation (10) dans une section de sortie (12) ;
- une cuve de retour (11) dans une section d'entrée (13) ;
- une sortie étanchéifiable (6) adaptée pour éjecter une multitude de sous-réservoirs (3) de ladite cuve d'alimentation (10) ; et
une entrée étanchéifiable (7) adaptée pour la collecte d'une multitude de sous-réservoirs (3) dans ladite cuve de retour (11),
et comprenant en outre :
- un compresseur (15) disposé entre ladite cuve d'alimentation (10) et ladite cuve de retour (11) fournissant une pression différentielle entre ladite cuve d'alimentation et ladite cuve de retour (11), dans lequel une pression dans ladite cuve d'alimentation (10) est plus grande que dans ladite cuve de retour (11) ;
moyennant quoi, lors du raccordement de ladite sortie étanchéifiable (6) et de ladite entrée étanchéifiable (7), un écoulement de gaz est généré par ladite pression différentielle pour transporter des sous-réservoirs (3) depuis la cuve d'alimentation (10) à travers ladite sortie étanchéifiable (6) et pour transporter des sous-réservoirs (3) à travers ladite entrée étanchéifiable (7) jusqu'à la cuve de retour (11).

2. Unité d'échangeur selon la revendication 1, **caractérisée en ce que**
ladite unité d'échangeur est adaptée pour faire partie d'une boucle fermée pour ledit écoulement de gaz permettant la recirculation dudit gaz.

3. Unité d'échangeur selon la revendication 1 ou 2, **caractérisée en ce que** les raccordements entre ladite cuve d'alimentation (10) et ladite sortie étanchéifiable (6) et les raccordements entre ladite entrée étanchéifiable (7) et ladite cuve de retour (11) sont tubulaires avec un diamètre intérieur légèrement plus grand que le diamètre extérieur des sous-réservoirs (3) et sont adaptés pour faire en sorte que les sous-réservoirs (3) soient déplacés les uns après les autres.

4. Unité d'échangeur selon l'une quelconque des revendications 1 à 3, **caractérisée en ce que**
ladite sortie étanchéifiable (6) et ladite entrée étanchéifiable (7) font partie d'un raccord étanchéifiable respectif (8, 9) .

5. Réservoir de combustible (1) pour manipuler une multitude de sous-réservoirs (3) pour des combustibles gazeux, ledit réservoir de combustible comprenant :
- une entrée de réservoir étanchéifiable (4) pour l'insertion de sous-réservoirs (3),
**caractérisé par** une sortie de réservoir étanchéifiable (5) pour libérer des sous-réservoirs (3),
et en ce que ledit réservoir de combustible (1) est configuré pour se raccorder à une unité d'échangeur selon la revendication 1 et adapté pour permettre à un écoulement de gaz prévu entre ladite entrée de réservoir étanchéifiable (4) et ladite sortie de réservoir étanchéifiable (5) de porter des sous-réservoirs (3) depuis ladite entrée de réservoir étanchéifiable (4) jusqu'à ladite sortie de réservoir étanchéifiable (5).

6. Réservoir de combustible selon la revendication 5, **caractérisé en ce que** ledit réservoir de combustible (1) comprend une structure interne ou ledit réservoir de combustible (1) est conformé pour forcer lesdits sous-réservoirs (3) à entrer et à sortir dudit réservoir de combustible (1) de manière séquentielle.

7. Réservoir de combustible selon la revendication 5 ou 6, **caractérisé en ce que** ledit réservoir de combustible (1) comprend au moins deux branchements (la, lb) pouvant être indépendamment mis sous pression en isolant les branchements (la, lb) à l'aide d'une ou plusieurs vannes d'isolement (14).

8. Réservoir de combustible selon la revendication 7, **caractérisé en ce que** le nombre de sous-réservoirs (3) dans chaque branchement (la, lb) est prédéterminé par la longueur d'un trajet de sous-réservoir à travers chaque dit branchement (la, lb).

9. Réservoir de combustible selon la revendication 7 ou 8, **caractérisé en ce que** chaque branchement (la, lb) est adressable individuellement.

10. Réservoir de combustible selon l'une quelconque des revendications 6 à 9, **caractérisé en ce que** ladite une entrée de réservoir étanchéifiable (4) et ladite sortie de réservoir étanchéifiable (5) font partie d'un raccord étanchéifiable respectif (8, 9) .

11. Système de manipulation d'une multitude de sous-réservoirs (3) pour combustibles gazeux, lesdits sous-réservoirs (3) comprenant une unité d'échangeur (2) selon l'une quelconque des revendications 1 à 4 et un réservoir de combustible (1) selon l'une quelconque des revendications 5 à 10, comprenant des raccords étanchéifiables (8, 9) entre ladite sortie étanchéifiable (6) et ladite entrée de réservoir étanchéifiable (4) et entre ladite sortie de réservoir étanchéifiable (5) et ladite entrée étanchéifiable (7), chaque raccord étanchéifiable (8, 9) comprenant deux vannes d'isolement (14), une bague d'interface (16) entre lesdites vannes d'isolement (14) et une vanne de ventilation (20) pour la bague d'interface (16).

12. Système selon la revendication 11, **caractérisé en ce qu'**au moins une des vannes d'isolement (14) du raccord étanchéifiable (8, 9) est adaptée pour utiliser un sous-réservoir (3) comme élément d'étanchéité.

13. Système selon la revendication 11 ou 12, **caractérisé en ce qu'**un manchon élastique (17) de la vanne d'isolement (14) fournit une surface d'étanchéité élastique afin d'étanchéifier également toute surface rugueuse du sous-réservoir (3).

14. Procédé de déplacement des sous-réservoirs (3) entre une unité d'échangeur (2) et un réservoir de combustible (1), le procédé comprenant les étapes consistant à :
- fournir un réservoir de combustible (1) qui comprend une entrée de réservoir étanchéifiable (4) et une sortie de réservoir étanchéifiable (5) et est rempli de sous-réservoirs (3) ;
- raccorder l'entrée de réservoir étanchéifiable (4) à une sortie étanchéifiable (6) de l'unité d'échangeur (2) et la sortie de réservoir étanchéifiable (5) à une entrée étanchéifiable (7) de l'unité d'échangeur (2) ;
- générer un écoulement de gaz à partir d'une cuve d'alimentation (10) de l'unité d'échangeur (2), laquelle cuve d'alimentation (10) comprend des sous-réservoirs préremplis (3), à travers le réservoir de combustible (1) et dans une cuve de retour (11) de l'unité d'échangeur (2),
moyennant quoi les sous-réservoirs préremplis (3) sont déplacés par ledit écoulement de gaz dans le réservoir de combustible (1) à travers la sortie étanchéifiable (6) et l'entrée de réservoir étanchéifiable (4) et les sous-réservoirs dudit réservoir de combustible (1) sont déplacés par ledit écoulement de gaz dans la cuve de retour (11) à travers la sortie de réservoir étanchéifiable (5) et l'entrée étanchéifiable (7).

15. Procédé selon la revendication 14, dans lequel la génération de l'écoulement de gaz comprend la génération d'une pression différentielle entre la cuve d'alimentation (10) et le réservoir de combustible (1) et entre le réservoir de combustible (1) et la cuve de retour (11) à l'aide d'un compresseur (15) disposé entre la cuve de retour (11) et la cuve d'alimentation (10) dans l'unité d'échangeur (2).

16. Procédé selon la revendication 14 ou 15, dans lequel des sous-réservoirs (3) sont utilisés comme éléments d'étanchéité dans au moins l'une des entrées et des sorties étanchéifiables (4, 5, 6, 7).

17. Procédé selon la revendication 15 ou 16, dans lequel l'écoulement de gaz circule dans une boucle fermée et recircule dans le réservoir de combustible raccordé (1) et l'unité d'échangeur (2).
